Europäisches Patentamt

European Patent Office

Office européen des brevets

(19)

(11) Numéro de publication: **0 356 286**

**A1**

(12) **DEMANDE DE BREVET EUROPEEN**

(21) Numéro de dépôt: 89402182.3

(22) Date de dépôt: 01.08.89

(51) Int. Cl.⁵: **G 06 K 15/12**
H 04 N 1/12, H 04 N 1/393

(30) Priorité: 03.08.88 FR 8810478

(43) Date de publication de la demande:
28.02.90 Bulletin 90/09

(84) Etats contractants désignés:
AT BE CH DE ES FR GB GR IT LI LU NL SE

(71) Demandeur: **SOCIETE D'APPLICATIONS GENERALES D'ELECTRICITE ET DE MECANIQUE SAGEM**
6, Avenue d'Iéna
F-75783 Paris Cédex 16 (FR)

(72) Inventeur: **Vegeais, Patrick**
16 rue Félicien David
78100 Saint Germain en Laye (FR)

**Lavergne, Christian**
21 rue de la Tournade
95220 Herblay (FR)

**Brunel, Christian**
17 rue Carle Hébert
92400 Courbevoie (FR)

(74) Mandataire: **Bloch, Gérard et al**
2, square de l'Avenue du Bois
F-75116 Paris (FR)

(54) **Imprimante laser à résolutions multiples.**

(57) L'imprimante comporte une mémoire (1) de points élémentaires, un microprocesseur 92) d'adressage et de lecture de la mémoire et une chaîne d'impression (3) comprenant un tambour d'impressions rotatif (4) et un générateur de faisceau laser (7) commandé par un contrôleur (8) et modulé par le microprocesseur (2), entre le générateur laser (7) et le tambour d'impression (4), un miroir (9) entraîné en rotation par un moteur (10) et agencé pour entraîner le faisceau laser en balayage ligne par ligne, des circuits d'asservissement (22-25) agencés pour délivrer un signal de synchronisation ligne et des moyens (18) pour générer un signal d'horloge d'adressage et de lecture de la mémoire d'image (1) et de commande du contrôleur (8) du générateur laser. Lesdits moyens de génération (18) sont agencés pour générer des signaux d'horloge de fréquences différentes. De même, le générateur (43), dont est pourvu l'imprimante pour le contrôle de la vitesse du moteur (10) du miroir de balayage (9), peut générer des signaux d'horloge de fréquences différentes. L'imprimante peut imprimer des documents avec des résolutions multiples. Elle s'applique bien à la bureautique et à la télécopie.

FIG.1

EP 0 356 286 A1

## Description

## Imprimante laser à résolutions multiples

La présente invention concerne une imprimante laser.

Une imprimante laser comporte une mémoire de points élémentaires ("bit map"), un microprocesseur d'adressage et de lecture de la mémoire et une chaîne d'impression comprenant un tambour d'impression rotatif et un générateur de faisceau laser commandé par un contrôleur et modulé par le microprocesseur, et, entre le générateur laser et le tambour d'impression, un miroir entraîné en rotation par un moteur et agencé pour entraîner le faisceau laser en balayage ligne par ligne.

Lorsque le contrôleur laser reçoit une commande d'impression d'une interface vidéo, il alimente le moteur d'entraînement du tambour d'impression. Après que la couche d'un matériau photosensible, dont est revêtu le tambour d'impression, ait été chargée négativement, elle est insolée par le faisceau laser.

Les éléments (éléments d'image ou "pixels") de la surface de la couche photosensible qui reçoivent la lumière, et qui correspondent aux points noirs de l'image, sont électriquement neutralisés et les charges négatives restant à la surface du tambour forment une image matricielle latente électrostatique qu'il ne reste plus qu'à développer et à transférer sur une feuille de papier. L'intensité du faisceau laser est modulé au rythme des pixels de l'image, en synchronisme avec son balayage.

Compte-tenu de la rotation du tambour d'impression, les lignes imprimées sont légèrement inclinées sur l'horizontale. La résolution physique du document imprimé, c'est-à-dire le nombre de points par unité de longueur, s'apprécie horizontalement et verticalement. La résolution horizontale $R_h$, c'est-à-dire le nombre de pixels par ligne, dépend de la vitesse de rotation du miroir de balayage et de la fréquence du signal logique d'alimentation du générateur laser par le contrôleur. La résolution verticale $R_v$ dépend de la vitesse de rotation du tambour et de la vitesse de rotation du miroir de balayage. Pour mémoire, la résolution effective du document imprimé est aussi déterminée par les dimensions du faisceau laser, celles des particules de la poudre, ou "toner" (mélange de magnétite et d'un liant), servant à former l'image à imprimer et qui sont transférées sur le cylindre d'impression au moyen d'un cylindre de développement et d'une lame métallique, les qualités de l'optique de focalisation, etc.

Comme miroir de balayage, on adopte généralement un miroir polygonal, à six faces, monté rotatif autour d'un axe orthogonal à l'axe de rotation du tambour de balayage. Une ligne est imprimée sur le papier pendant le balayage du faisceau laser par une seule face du miroir, le passage du faisceau laser d'une face à la face adjacente, au-delà de l'arête commune, provoquant le retour ligne.

Dans une imprimante laser, la vitesse d'impression en pages par minute (ppm) est un paramètre constant. C'est lui qui dimensionne toute la mécanique de la machine : dimensions et vitesse de rotation du tambour d'impression, dimensions et température du four de fixation des particules de toner sur le papier, etc. Il en résulte finalement que c'est par la vitesse de rotation du miroir de balayage et la fréquence d'introduction des données série de contrôle, ou d'alimentation, du générateur laser qu'on détermine les résolutions du document imprimé.

En négligeant, principalement, les temps morts et les marges du document, on a les relations suivantes :

$$R_h = \frac{F_d}{n\,F_m\,L} \qquad (1)$$

$$R_v = \frac{60nFm}{V_i\,H} \qquad (2)$$

dans lesquelles,

$F_d$ est la fréquence d'introduction des données série, en Hz,
$F_m$, la fréquence de rotation du miroir, en Hz,
$n$, le nombre de faces du miroir polygonal de balayage,
$L$, la largeur de la page à imprimer, en mm,
$H$, la hauteur de la page à imprimer, en mm,
$V_i$, la vitesse d'impression, en ppm,
$R_h$ et $R_v$ étant exprimées en mm$^{-1}$, et pouvant être converties en points par pouce (ppp). La résolution horizontale $R_h$, à vitesse de rotation du miroir de balayage fixe, est proportionnelle à la fréquence $F_d$ d'introduction des données. C'est facile à démontrer.

La résolution verticale $R_v$, à vitesse de rotation du tambour d'impression fixe, et qui dépend de l'inclinaison des lignes sur l'horizontale, est proportionnelle à la vitesse de rotation du miroir de balayage.

Une imprimante classique pour format A4 a une vitesse d'impression $V_i$ de 8 ppm, un miroir de balayage

2

donc à 6 faces, et une résolution isotrope de 300 ppp. On tire des relations (1) et (2) :

$F_m$ = 78 Hz, soit 4700 tours par minute,

$F_d$ = 1,2 MHz.

C'est le développement de la bureautique qui a présidé à l'essor des procédés d'impression par laser, avec une qualité de reproduction sans cesse améliorée. Parallèlement, les techniques de transmission de documents, différentes et plus performantes que la transmission telex, se sont également développées, comme le télétex et la télécopie. Pour la télécopie, on procède, au plan de la transmission, comme dans une imprimante laser au plan de l'impression, c'est-à-dire par segmentation d'une image en une matrice de points élémentaires.

Or, les résolutions utilisées en bureautique et en télécopie ne sont pas les mêmes. Elles sont actuellement généralement plus faibles en télécopie, de l'ordre de 200 ppp en groupe III, mais pourront être plus importantes dans l'avenir (400 ppp), notamment pour la télécopie sur réseau numérique à intégration de services (RNIS). Par ailleurs, certains fabricants proposent déjà des imprimantes à résolution de 400 ppp, voire même 600 ppp.

Mais toutes les imprimantes laser actuellement disponibles ne disposant que d'une seule résolution.

Si on veut reproduire des documents de résolution différente de celle de l'imprimante, tout en conservant les dimensions d'origine de ces documents, il fait, aujourd'hui, procéder à un changement de résolution et, pour ainsi dire, adapter les documents à l'imprimante. L'inconvénient d'un tel changement de résolution réside dans la nécessité soit d'un long temps de calcul soit d'un emploi d'un processeur performant et donc coûteux pour la mise en oeuvre d'un algorithme de transformation. Il en résulte d'ailleurs un inconvénient secondaire, dû à la transformation elle-même, qui est la dégradation de la qualité visuelle des documents.

La présente invention vise à pallier ces inconvénients.

La chaîne d'impression d'une imprimante laser comporte, outre sa portion mécanique, évoquée ci-dessus, des circuits d'asservissement agencés pour, notamment, délivrer un signal de synchronisation ligne qui commande le microprocesseur, par l'interface vidéo, et rythme le déplacement du document à imprimer. Entre deux tops successifs de ce signal de synchronisation ligne, c'est un oscillateur délivrant un signal d'horloge qui rythme à la fréquence $F_d$, considérée ci-dessus, l'introduction des données à imprimer dans le générateur laser par l'intermédiaire de l'interface vidéo et de son contrôleur.

Dans ces conditions, la présente invention concerne une imprimante laser comportant une mémoire de points élémentaires, un microprocesseur d'adressage et de lecture de la mémoire et une chaîne d'impression comprenant un tambour d'impression rotatif, à vitesse constante en un générateur de faisceau laser commandé par un contrôleur et modulé par le microprocesseur, entre le générateur laser et le tambour d'impression, un miroir entraîné en rotation par un moteur et agencé pour entraîner le faisceau laser en balayage ligne par ligne, des circuits d'asservissement agencés pour délivrer un signal de synchronisation ligne et des moyens pour générer un signal d'horloge d'adressage et de lecture de la mémoire d'image et de commande du contrôleur du générateur laser, caractérisée par le fait que lesdits moyens de génération sont agencés pour générer des signaux d'horloge de fréquences différentes.

Grâce à l'invention, la commande du générateur laser peut donc s'effectuer à diverses fréquences et, par conséquent, l'imprimante imprimer des documents avec des résolutions horizontales multiples. En d'autres termes, l'imprimante de l'invention peut être adaptée à la résolution des documents à imprimer, sans avoir à transformer cette résolution.

Les moyens de génération des signaux d'horloge peuvent comprendre une pluralité d'oscillateurs de fréquences respectivement différentes et des moyens de commutation de l'un des oscillateurs sur un autre, comprenant par exemple un commutateur électronique de sélection. Ces moyens de génération peuvent également comprendre un oscillateur à fréquence variable.

Les circuits d'asservissement d'une imprimante classique comprennent un deuxième oscillateur délivrant un signal d'horloge dont l'intervalle élémentaire est multiplié par un nombre N prédéterminé dans la chaîne d'impression, le produit de la multiplication y étant comparé à la période du signal de synchronisation ligne par mesure de sécurité, pour fournir une fréquence de consigne à un soustracteur, recevant également le signal d'une génératrice tachymétrique montée sur l'arbre du moteur d'entraînement du miroir de balayage, signal de fréquence dépendant de la vitesse du moteur, le soustracteur délivrant un signal d'erreur qui est amplifié et qui contrôle le moteur du miroir.

Dans ces conditions, la présente invention concerne aussi une imprimante laser comportant une mémoire de points élémentaires, un microprocesseur d'adressage et de lecture de la mémoire et une chaîne d'impression comprenant un tambour d'impression rotatif, à vitesse constante et un générateur de faisceau laser commandé par un contrôleur et modulé par le microprocesseur, entre le générateur laser et le tambour d'impression, un miroir entraîné en rotation par un moteur et agencé pour entraîner le faisceau laser en balayage ligne par ligne, des moyens pour générer un signal d'horloge d'adressage et de lecture de la mémoire d'image et de commande du contrôleur du générateur laser et des circuits d'asservissement agencés pour délivrer un signal de synchronisation ligne et comprenant des moyens pour générer un signal d'horloge de contrôle de la vitesse du moteur du miroir de balayage et des moyens pour délivrer un signal de contrôle de la vitesse du miroir, caractérisée par le fait que lesdits moyens de génération sont agencés pour générer des signaux d'horloge de fréquences différentes.

Grâce à l'invention, le moteur d'entraînement du miroir de balayage peut tourner à des vitesses diverses et, par conséquent, l'imprimante imprimer avec des résolutions verticales multiples.

EP 0 356 286 A1

Tout comme les moyens de génération des signaux d'horloge de commande du contrôleur laser, les moyens de génération des signaux d'horloge de contrôle du moteur de balayage peuvent comprendre une pluralité d'oscillateurs de fréquences respectivement différentes et/ou un oscillateur à fréquence variable.

On notera que le document US-A-4 578 689 enseigne une imprimante laser dans laquelle la modulation du faisceau laser, à une fréquence fournie par un système d'horloge, un tambour d'impression, mais entraîné à une vitesse définie par le système d'horloge, et une haute résolution, avec un faisceau laser modulé à grande fréquence et un tambour entraîné à basse fréquence, et une basse résolution, avec un faisceau laser modulé à plus basse fréquence et un tambour entraîné à plus grande fréquence.

Ainsi, le système d'horloge du document US-A-4 578 689 agit sur la vitesse du tambour d'impression, qui n'est donc pas constante, contrairement au système de la présente invention qui adresse et lit la mémoire d'image et commande le contrôleur de générateur laser. Les deux principes d'obtention de résolutions multiples du document US-A-4 578 689 et de la présente demande sont donc fondamentalement différents.

L'invention sera mieux comprise à l'aide de la description suivante de l'imprimante laser de l'invention, en référence aux dessins annexés, sur lesquels

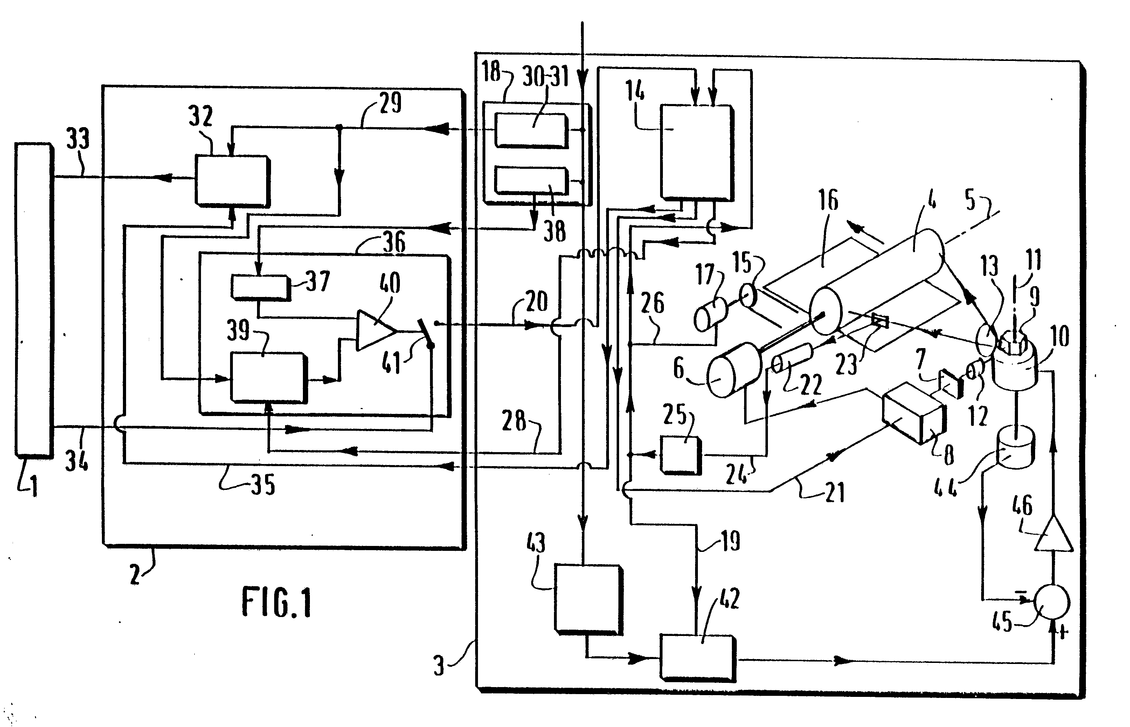

- la figure 1 est une vue d'ensemble de l'imprimante, et
- la figure 2 est une vue schématique du générateur de fréquences de commande du contrôleur laser de l'imprimante de la figure 1.

L'imprimante laser qui va maintenant être décrite ne va pas l'être rigoureusement dans tous ses organes et composants. Seuls ceux nécessaires à la compréhension de l'invention vont être abordés. Quant aux autres, ils sont strictement identiques à ceux des imprimantes laser classiques mono-résolution qu'on trouve dans le commerce.

L'imprimante représentée comporte une mémoire de points élémentaires 1, un microprocesseur 2 et une chaîne, ou coeur, d'impression 3. Le coeur d'impression 3 contient un tambour d'impression 4, d'axe 5, avec son moteur 6 d'entraînement en rotation, une diode laser 7, destinée à émettre un faisceau ponctuel de longueur d'onde voisine de 0,8 μm, un contrôleur 8 de commande de la diode 7, un miroir de balayage 9 rotatif monté sur un moteur 10, ici à courant continu, d'entraînement en rotation, d'axe 11 orthogonal à l'axe 5 du tambour 4, un dispositif 15 d'entraînement d'un document à imprimer, avec son moteur d'entraînement 17. Le miroir 9 est un miroir polygonal, ici à six faces. Le faisceau laser traverse une première lentille 12, avant d'être dévié et réfléchi par l'une des faces du miroir 9, de traverser une deuxième lentille 13 et d'atteindre le tambour 4.

Le contrôleur laser 8 est commandé, à travers une ligne 21, par une interface vidéo 14, contenant les principaux paramètres d'impression et par laquelle l'impression est commandée. C'est le contrôleur 8 qui alimente le moteur d'entraînement 6 du tambour 4. Pour le contrôle de la diode 7, le contrôleur 8 reçoit de la mémoire 1, par l'intermédiaire du microprocesseur 2, d'une ligne 20, de l'interface 14 et de la ligne 21, les pixels à imprimer qui modulent l'intensité du faisceau laser, la diode étant au demeurant alimentée à l'aide d'une source de tension non représentée.

Un capteur photosensible 22 est disposé pour détecter, après réflexion sur un miroir 23, le faisceau laser ici au début de chaque ligne de balayage, avant que le faisceau n'atteigne la surface du tambour 4. C'est un générateur de signal de synchronisation ligne qui, à travers une fibre optique 24, alimente une carte 25, contenant un photo-transistor, qui commande, par une ligne 26, le moteur 17 du dispositif 15 d'entraînement du document 16 et qui, par l'interface vidéo 14 et une ligne de commande 28, est reliée au microprocesseur 2.

Le générateur de fréquences 18, qui va maintenant être abordé, et le capteur de détection de faisceau 22, 23 constituent une partie des circuits d'asservissement du coeur d'impression de l'imprimante.

Le générateur de fréquences 18 émet un signal d'horloge de contrôle de la diode 7, ou de commande du contrôleur laser 8, qui, par une ligne 29, est envoyé sur le microprocesseur 8 pour l'adressage et la lecture des pixels de la mémoire 1, au rythme des tops d'horloge de ce signal. Ce générateur 18 est constitué pour émettre des signaux de fréquences différentes et permettre ainsi, comme vu plus haut, l'impression du document 16 avec des résolutions horizontales différentes. Il peut être constitué de trois manières différentes.

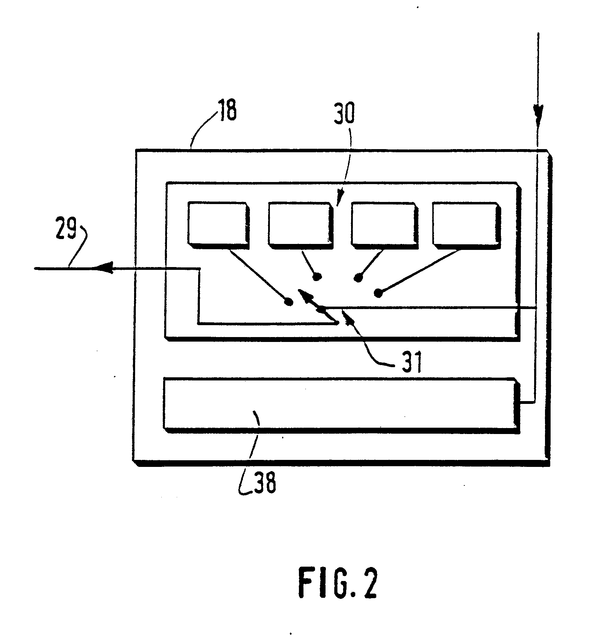

En référence à la figure 2, le générateur 18 comporte une pluralité d'oscillateurs 30 pilotés par quartz, de fréquences différentes, et un commutateur électronique 31 commandé par l'opérateur, ou par logiciel, pour fournir le signal d'horloge approprié au microprocesseur 2 et au contrôleur laser 8. En cas de commande par logiciel, celui-ci est stocké dans une mémoire par exemple disposée à côté de la mémoire d'image 1.

Le générateur 18 peut aussi comporter un oscillateur à fréquence variable. Il peut comporter encore et une pluralité d'oscillateurs de fréquences discrètes respectivement différentes et un oscillateur à fréquence variable afin de disposer d'un maximum de souplesse.

Le signal d'horloge issu du générateur 18 incrémente, dans le microprocesseur 2, un compteur 32 d'adressage 33 et de lecture 34 de la mémoire 1. La remise à zéro du compteur 32 s'effectue, depuis l'interface vidéo 14 et par une ligne 35, à l'aide d'un top d'un signal de synchronisation page.

Représenté dans le microprocesseur 2 dans un souci d'homogénéité, mais en fait extérieur à lui, se trouve un circuit 36 d'introduction des données de la mémoire 1 dans le contrôleur 8 par la ligne 20, l'interface 14 et la ligne 21.

Ce circuit comporte une mémoire 37, programmée depuis un circuit 38 du générateur 18, en fonction de la fréquence du signal de sortie du générateur 18, et qui contient le nombre total de pixels par ligne à imprimer.

Le circuit 36 comporte un compteur 39 incrémenté par le signal d'horloge issu du générateur 18. Un comparateur 40 reçoit sur ses deux entrées les sorties de la mémoire 37 et du compteur 39. Quand elles sont

4

identiques, le comparateur 40 interrompt l'introduction des données de la mémoire 1, par l'interface 14 et la ligne 21, dans le contrôleur laser 8 par un interrupteur électronique 41. Par la ligne de commande 28, le compteur 39 est remis à zéro par les tops du signal de synchronisation ligne.

En pratique, les bits, ou pixels, de la mémoire 1 sont lus octet par octet, mis en série, ou sérialisés, avant d'être envoyés, par les lignes 34, 20, 14, 21, sur le contrôleur 8 et la diode 7.

Pour le contrôle de la vitesse du moteur 10 d'entraînement du miroir de balayage 9, il est prévu un circuit d'asservissement dans le coeur d'impression 3 de l'imprimante. Un circuit 42 reçoit un signal d'horloge d'un générateur de fréquences 43, dont l'intervalle élémentaire, ou la durée de la période, est multiplié par un nombre N prédéterminé, pour fournir un signal à fréquence de consigne, le produit de la multiplication effectuée étant égal à la durée de la période du signal de synchronisation ligne. Par souci de sécurité, ce produit est comparé dans le circuit 42 à la durée effective de la période ligne du signal délivré par la carte 25 à travers une ligne 19. Par ailleurs, une génératrice tachymétrique 44 est entraînée par le moteur 10 d'entraînement du miroir 9, pour fournir un signal à fréquence dépendant de la vitesse de rotation du moteur 10. Les signaux de sortie du tachymètre 44 et du circuit 42 sont envoyés sur un soustracteur 45, ici respectivement sur ses entrées négative et positive, et dont la sortie fournit un signal d'erreur amplifié dans un amplificateur 46 avant d'être appliqué au moteur 10 pour en contrôler la vitesse.

Le générateur 43 est constitué pour émettre des signaux de fréquences différentes et permettre ainsi, comme vu plus haut, l'impression du document 16 avec des résolutions verticales différentes. Le générateur 43 est constitué comme la partie génération de fréquences du générateur 18. Quand on veut changer la résolution verticale de l'impression, il suffit, par exemple, de commuter ou faire commuter un oscillateur sur un autre; on notera que le facteur multiplicateur N du circuit 42 reste inchangé, la période du signal de synchronisation ligne délivré sur la ligne de commande 19 s'adaptant à la nouvelle résolution verticale.

On vient de décrire une imprimante laser à résolutions multiples aussi bien horizontalement que verticalement. Bien entendu, la résolution horizontale pouvant être modifiée indépendamment de la résolution verticale, on conçoit qu'il serait possible de prévoir une imprimante de l'invention avec résolutions horizontales multiples seulement. Inversement, on pourrait ne vouloir agir positivement que sur la résolution verticale. Toutefois, cela ne serait pas très avantageux, dans la mesure où, selon les relations (1) et (2) ci-dessus, quand la résolution verticale augmente, avec la vitesse de rotation du miroir de balayage, la résolution horizontale diminue. En pratique, $V_i$, H et L étant données, et $R_H$ et $R_v$ choisies, on détermine $F_d$ et $F_m$ par résolution du système des deux équations (1) et (2) ci-dessus, à deux inconnues.

On soulignera ici que l'invention trouve une application appropriée non seulement en bureautique, main également en réception d'informations, comme par exemple dans le cadre de terminaux à fonctions multiples (multifonctions).

Par ailleurs, il est aisément apparu de la description qui précède, qu'il était possible de considérer une imprimante laser du marché à résolution unique et de la modifier conformément à la présente invention.


**Revendications**

1. Imprimante laser comportant une mémoire (1) de points élémentaires, un microprocesseur (2) d'adressage et de lecture de la mémoire et une chaîne d'impression (3) comprenant un tambour d'impression rotatif (4), à vitesse constante, et un générateur de faisceau laser (7) commandé par un contrôleur (8) et modulé par le microprocesseur (2), entre le générateur laser (7) et le tambour d'impression (4), un miroir (9) entraîné en rotation par un moteur (10) et agencé pour entraîner le faisceau laser en balayage ligne par ligne, des circuits d'asservissement (22-25) agencés pour délivrer un signal de synchronisation ligne et des moyens (18) pour générer un signal d'horloge d'adressage et de lecture de la mémoire d'image (1) et de commande du contrôleur (8) du générateur laser, caractérisée par le fait que lesdits moyens de génération (18) sont agencée pour générer des signaux d'horloge de fréquences différentes.

2. Imprimante laser comportant une mémoire (1) de points élémentaires, un microprocesseur (2) d'adressage et de lecture de la mémoire et une chaîne d'impression (3) comprenant un tambour d'impression rotatif (4), à vitesse constante, et un générateur de faisceau laser (7) commandé par un contrôleur (8) et modulé par le microprocesseur (2), entre le générateur laser (7) et le tambour d'impression (4), un miroir (9) entraîné en rotation par un moteur (10) et agencé pour entraîner le faisceau laser en balayage ligne par ligne, des moyens (18) pour générer un signal d'horloge d'adressage et de lecture de la mémoire d'image (1) et de commande du contrôleur du générateur laser (8) et des circuits d'asservissement agencés pour délivrer un signal de synchronisation ligne (22-25) et comprenant des moyens (43) pour générer un signal d'horloge de contrôle de la vitesse du moteur (10) du miroir de balayage (9) et des moyens (42) pour délivrer un signal de contrôle de la vitesse du miroir (9), caractérisée par le fait que lesdits moyens de génération (43) sont agencés pour générer des signaux d'horloge de fréquences différentes.

3. Imprimante laser selon la revendication 1, dans laquelle lesdits moyens (18) de génération d'un signal de commande du contrôleur laser (8) comprennent une pluralité d'oscillateurs (30) commutables (31) de fréquences respectivement différentes.

4. Imprimante laser selon l'une des revendications 1 et 3, dans laquelle lesdits moyens (18) de génération d'un signal de commande du contrôleur laser (8) comprennent un oscillateur à fréquence variable.

5. Imprimante laser selon la revendication 2, dans laquelle lesdits moyens (43) de génération d'un signal d'horloge de contrôle de la vitesse du miroir de balayage (9) comprennent une pluralité d'oscillateurs commutables de fréquences respectivement différentes.

6. Imprimante laser selon l'une des revendications 2 et 5, dans laquelle lesdits moyens (43) de génération d'un signal d'horloge de contrôle de la vitesse du miroir de balayage (9) comprennent un oscillateur à fréquence variable.

7. Imprimante laser selon la revendication 1, dans laquelle le microprocesseur (2) comprend un circuit (36) d'introduction des données de la mémoire (1) dans le contrôleur laser (8), comportant une mémoire (37), contenant le nombre de pixels par ligne à imprimer et qui est programmée par lesdits moyens (18) de génération d'un signal de commande du contrôleur laser (8), un compteur (39), qui est incrémenté par ledit signal de commande du contrôleur laser, un comparateur (40), recevant sur ses deux entrées les sorties de la mémoire (37) et du compteur (39), et des moyens (41), commandées par le signal de sortie du comparateur (40), pour interrompre l'introduction des données de la mémoire (1) dans le contrôleur laser (8).

8. Imprimante laser selon la revendication 1, caractérisée par le fait qu'elle comporte des moyens (43), pour générer des signaux d'horloge de fréquences différentes de contrôle de la vitesse du moteur (10) du miroir de balayage (9), et des moyens (42) agencés pour délivrer un signal de contrôle de la vitesse du moteur (10) du miroir (9).

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | US-A-4 578 689  (D. R. SPENCER et al.) * abrégé; figure 1 * --- | 1,2 | G 06 K  15/12 H 04 N   1/12 H 04 N   1/393 |
| A | FR-A-2 543 771  (CANON K.K.) * abrégé; page 4, ligne 19 - page 5, ligne 4; page 6, ligne 17 - page 8, ligne 26; revendication 1; figures 3,4 * --- | 1,2 | |
| A | US-A-4 322 717  (K. IIDA) * abrégé; colonne 12, lignes 8-68; figures 1,5A-5F * --- | 1,2 | |
| A | EP-A-0 210 618  (SHARP K.K.) * abrégé; page 4, paragraphe 2 - page 5, paragraphe 1; figure 5 * --- | 1-3,6 | |
| A | EP-A-0 040 953  (SPERRY CORP.) * abrégé; figure 1 * ----- | 1,2,4,6 | |

DOMAINES TECHNIQUES RECHERCHES (Int. Cl.5)

G 06 K  15/12
H 04 N   1/12
H 04 N   1/393

Le présent rapport a été établi pour toutes les revendications

| Lieu de la recherche | Date d'achèvement de la recherche | Examinateur |
|---|---|---|
| BERLIN | 23-10-1989 | DUCREAU F B |

EPO FORM 1503 03.82 (P0402)